# EUROPEAN PATENT APPLICATION

(11) **EP 2 757 325 A1**
(43) Date of publication of application: **23.07.2014**
(21) Application number: 14151800.1
(22) Date of filing: 20.01.2014
(51) Int. Cl.: F24F 11/00

(54) **HVAC system with an outdoor unit controller configured to receive request from an indoor unit controller and to reply thereon and indoor unit controller**

(30) Priority: 21.01.2013 US 201361754936 P; 14.06.2013 US 201313918222
(71) Applicant: Lennox Industries Inc., Richardson, TX 75080 (US)
(72) Inventor: Hrejsa, Pete, Carrollton, TX Texas 75006 (US); Sakai, Takeshi, Carrollton, TX Texas 75006 (US)
(74) Representative: Williams, David John

(57) **Abstract**

An HVAC system that obtains demand specific data from an outdoor unit thereof is provided. An indoor unit controller, an outdoor unit controller and an outdoor unit of the HVAC system are also disclosed. In one embodiment, the outdoor unit controller includes: (1) an interface configured to receive a request for a second portion of demand data from an indoor controller of the HVAC system, wherein the request includes a first portion of the demand data that corresponds to the second portion and (2) a processor configured to respond to the request by determining the second portion based on the first portion and sending the second portion of the demand data to the indoor controller of the HVAC system.

## Description

### CROSS REFERENCE TO RELATED APPLICATION

This application claims the benefit of U.S. Provisional Application Serial No. 61/754,936, filed by Pete Hrejsa, et al., on January 21, 2013, entitled "METHOD FOR OBTAINING DEMAND SPECIFIC DATA FROM A REMOTE UNIT," which is currently pending and incorporated herein by reference.

### TECHNICAL FIELD

This application is directed, in general, to heating, ventilating and air conditioning (HVAC) systems and, more specifically, to demand data for HVAC systems.

### BACKGROUND

HVAC systems can be used to regulate the environment within an enclosure. Typically, a thermostat call initiates operation of an HVAC system that results in a circulating fan pulling air from the enclosure into the HVAC system through ducts and pushing the air back into the enclosure through additional ducts after conditioning the air (e.g., heating or cooling the air). Some circulating fans move air through the HVAC system at different volumes that can vary based on the operating mode (e.g., heating, cooling, dehumidification) of the HVAC system and the requested compressor capacity or speed per the thermostat call.

### SUMMARY

In one aspect, a controller for a multispeed outdoor unit of a HVAC system is disclosed. In one embodiment, the outdoor unit controller includes: (1) an interface configured to receive a request for a second portion of demand data from an indoor controller of the HVAC system, wherein the request includes a first portion of the demand data that corresponds to the second portion and (2) a processor configured to respond to the request by determining the second portion based on the first portion and sending the second portion of the demand data to the indoor controller of the HVAC system.

In another aspect, a controller for an indoor unit of a HVAC system is disclosed. In one embodiment, the indoor unit controller includes: (1) an interface configured to receive a thermostat call and (2) a processor configured to send a request for demand data that corresponds to the thermostat call to a controller of an outdoor unit of the HVAC system, wherein the requested demand data is a blower volume for a circulating fan of the HVAC system.

In still yet another aspect, a multispeed outdoor unit of a HVAC system is provided. In one embodiment, the multispeed outdoor unit includes: (1) a compressor and (2) an outdoor unit controller configured to direct operations of the compressor, the outdoor unit controller including (2A) an interface configured to receive a request for a second portion of demand data from an indoor controller of the HVAC system, wherein the request includes a first portion of the demand data that corresponds to the second portion and (2B) a processor configured to respond to the request by determining the second portion based on the first portion and sending the second portion of the demand data to the indoor controller of the HVAC system.

### BRIEF DESCRIPTION

Reference is now made to the following descriptions taken in conjunction with the accompanying drawings, in which:
FIG. 1 illustrates a high-level block diagram of an embodiment of a HVAC system constructed according to the principles of the disclosure;
FIG. 2 illustrates a block diagram of an embodiment of an outdoor unit controller of an HVAC system constructed according to the principles of the disclosure;
FIG. 3 illustrates a block diagram of an embodiment of an indoor unit controller of an HVAC system constructed according to the principles of the disclosure;
FIG. 4 illustrates a flow diagram of an embodiment of a method of operating an HVAC system carried out according to the principles of the disclosure; and
FIG. 5 illustrates a flow diagram of an embodiment of another method of operating an HVAC system carried out according to the principles of the disclosure.

### DETAILED DESCRIPTION

The blower volumes for a circulating fan are usually stored in an indoor controller of a HVAC system. The blower volume is the airflow capacity (often expressed in terms of cubic feet per minute, or CFM) of the circulating fan. Typically, storing the blower volume in a controller of the indoor unit has been convenient since the blower volume for a compressor speed is fairly constant and universal for different types of compressors. In some HVAC systems, modulating compressor is used that operates more efficiently compared to conventional single stage units and reduces energy costs.

When operating the modulating compressor there are often specific blower volumes that correspond to each compressor speed. The relationship between blower volume and compressor speed is non-linear and unique for each type of compressor. As such, maintaining the blower volume for each compressor capacity of every thermostat call can require a large portion of memory for an indoor controller of an HVAC system. Additionally, upgrading the indoor controller with new blower volumes for compressor speed data can be cumbersome.

Accordingly, the disclosure provides a system and scheme that does not require a HVAC indoor controller to store the desired blower volumes to deliver for operating speeds of an outdoor unit. Instead, the disclosed HVAC system stores the demand blower volumes in the outdoor unit and requests the specific blower volume from the outdoor unit for a particular operating speed. An outdoor unit controller can be used to store the corresponding operating compressor speeds and blower volumes. The values for each can be stored in a data table in a memory of the outside unit controller. In one embodiment, a look-up table is used.

Thus, the embodiments disclosed herein relieve the indoor controller from the burden of knowing each outdoor unit's blower volume to demand relationship. Additionally, the embodiments allow an existing indoor unit to be compatible with new outdoor units of the HVAC system. The new outdoor units can even be currently undeveloped outdoor units.

In addition to modulating compressors, some HVAC systems also use zone controls. A zone controlled system allows a user to independently control the temperature in various designated zones of an enclosure, such as a house. A zone control panel or zone controller manages the movement of conditioned air to the various zones using electronic dampers and thermostats dedicated to each of the zones. Harmony III™ Zone Control System available from Lennox Industries, Inc. of Richardson, Texas, is an example of a zoning system that manages the distribution of conditioned air to designated zones.

In a zone controlled system, a zone controller generates a blower control signal to control the operating speed of a circulation fan. As such, the blower control signal is used to control the blower volume of the circulation fan. The blower control signal typically changes in a zone controlled system when demand changes to different or more zones. For example, a thermostat in a first zone may demand heat. As such, the furnace initiates and provides heat for the first zone based on the heating call and an operating speed for the circulation fan for the first zone. A thermostat for a second zone then demands heat. Accordingly, the furnace continues to provide heat with an operating speed of the circulation fan based on the blower control signal generated by the zone controller for both the first and second zones. The blower control signal is typically an electrical signal generated by a zoning control panel in response to thermostat demands from different zones. The blower control signal can be an analog or a digital signal. Considering the Harmony III™ Zone Control System, a pulse width modulated (PWM) signal is used for a blower control signal and a change in the duty cycle of the PWM signal indicates a change in the operating speed of the circulation fan. In other embodiments, the blower control signal can be a data signal including a messaging protocol signal, such as a controller area network (CAN) signal, or an output of a transducer.

In these embodiments, the blower volume is known from the blower control signal and does not need to be requested by the indoor unit controller from the outdoor unit controller. Instead, the indoor unit controller can send the known blower volume to the outdoor unit controller that can determine the corresponding operating speed of the outdoor unit. The outdoor unit controller can then send the demand level, or percent demand of the outdoor unit that corresponds to the blower volume, back to the indoor unit controller so that it knows the level of demand to send. Thus, known data from the indoor unit controller can be used by the outdoor unit controller to determine either portion of the demand data not known.

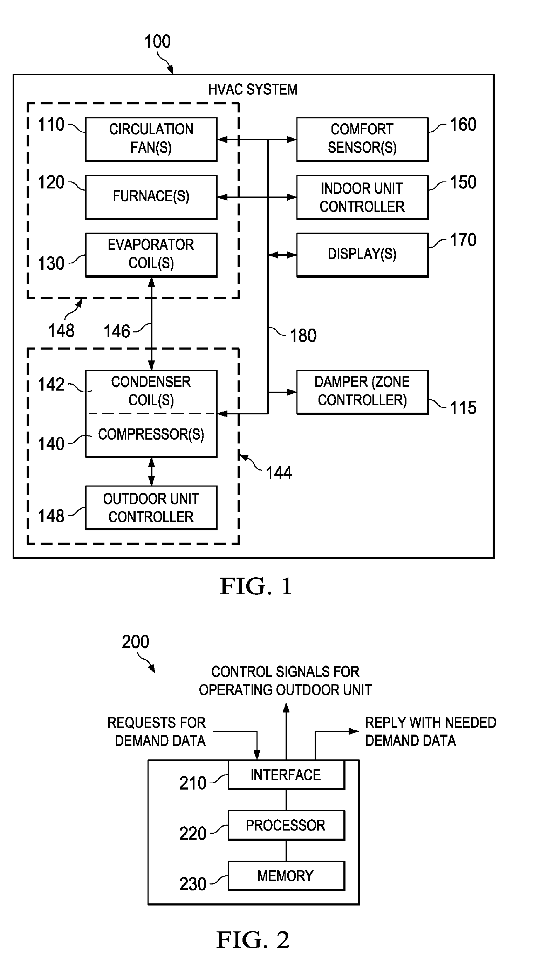

FIG. 1 is a high-level block diagram of an embodiment of a HVAC system 100 constructed according to the principles of the disclosure. In one embodiment, the HVAC system 100 is configured to provide ventilation and therefore includes one or more circulation fans 110. In an alternative embodiment, the ventilation includes one or more dampers 115 to control air flow through air ducts (not shown.) Such control may be used in various embodiments in which the HVAC system 100 is a zoned system. In the context of a zoned HVAC system 100, the one or more dampers 115 may be referred to as zone controllers 115.

The zone controller 115 is configured to manage conditioned air for designated zones of a conditioned space. A zone is a portion of a HVAC system that includes at least one demand unit, such as the furnace 120, and includes at least one user interface, such as a thermostat. The zone controller 115 operates electronic dampers to control air flow to zones of the conditioned space. The zone controller 115 generates a blower control signal to request a blower volume for the circulation fan 110. In some embodiments, the zone controller 115 is configured to provide greater air flow to different zones to compensate for greater heating load or air flow requirements. As such, the blower control signal requests a greater blower volume with respect to, for example, a heating call for a first zone than a second zone. The zone controller 115 can be a conventional controller for delivering conditioned air to designated zones of a conditioned space. For example, the zone controller 190 can be a Harmony III™ Zone Controller.

In some embodiments, the HVAC system 100 is configured to provide heating and therefore includes one or more furnaces 120, typically associated with the one or more circulation fans 110. In an alternative embodiment, the HVAC system 100 is configured to provide cooling and therefore includes one or more refrigerant evaporator coils 130, typically associated with the one or more circulation fans 110. Such embodiment of the HVAC system 100 also includes one or more compressors 140 and associated condenser coils 142, which are typically associated in one or more so-called "outdoor units" 144. The one or more compressors 140 and associated condenser coils 142 are typically connected to an associated evaporator coil 130 by a refrigerant line 146.

Although not shown in FIG. 1, the HVAC system 100 may include one or more heat pumps in lieu of or in addition to the one or more furnaces 120, and one or more compressors 140. One or more humidifiers or dehumidifiers may be employed to increase or decrease humidity.

The HVAC system 100 can be configured to provide ventilation, heating and cooling, wherein the one or more circulation fans 110, furnaces 120 and evaporator coils 130 are associated with one or more "indoor units" 148, e.g., basement or attic units.

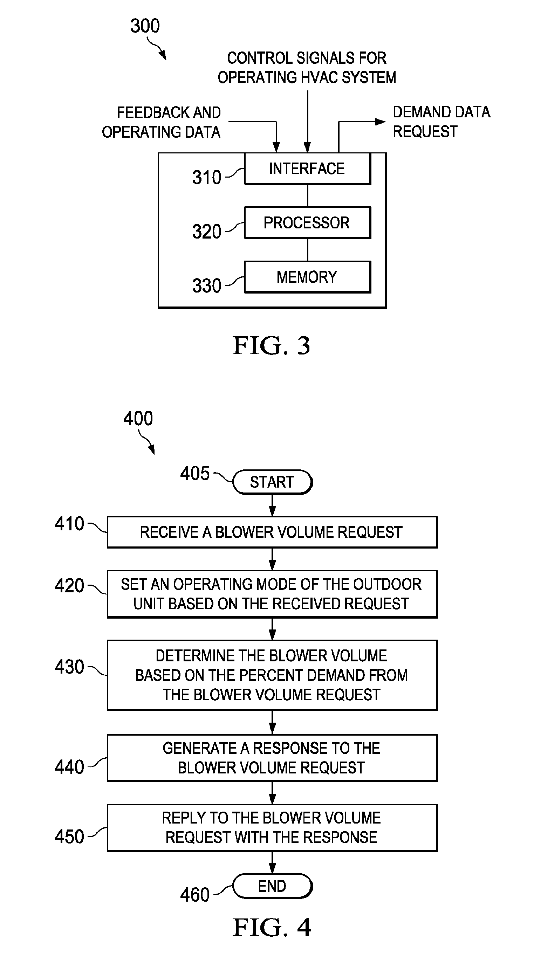

One or more indoor unit controllers 150 control one or more of the one or more circulation fans 110, the one or more furnaces 120 and/or the one or more compressors 140 to regulate the temperature of the premises, at least approximately. The indoor unit controller 150 may be an integrated controller or a distributed controller that directs operation of the HVAC system 100. The indoor unit controller 150 may include an interface to receive thermostat calls and a blower control signal, and a processor, such as a microprocessor, to direct the operation of the HVAC system 100. The indoor unit controller 150 may include a memory section having a series of operating instructions stored therein that direct the operation of the indoor unit controller 150 (e.g., the processor) when initiated thereby. The series of operating instructions may represent algorithms that are used to obtain blower volumes for the circulation fans 110 and operating speeds of the compressors 140. For example, the algorithms can implement the method illustrated in FIG. 4. The indoor unit controller 150 can be a central HVAC controller or a thermostat. A thermostat can generate thermostat calls based on temperature settings. The thermostat calls include, for example, heating calls, cooling calls and dehumidifying calls.

In various embodiments, the one or more displays 170 provide additional functions such as operational, diagnostic and status message display and an attractive, visual interface that allows an installer, user or repairman to perform actions with respect to the HVAC system 100 more intuitively. Herein, the term "operator" will be used to refer collectively to any of the installer, the user and the repairman unless clarity is served by greater specificity. The displays 170 can be part of the indoor unit controllers 150.

One or more separate comfort sensors 160 may be associated with the one or more indoor unit controller 150 and may also optionally be associated with one or more displays 170. The one or more comfort sensors 160 provide environmental data, e.g. temperature and/or humidity, to the one or more indoor control units 150. An individual comfort sensor 160 may be physically located within a same enclosure or housing as the control unit 150. In such cases, the commonly housed comfort sensor 160 may be addressed independently. However, the one or more comfort sensors 160 may be located separately and physically remote from the one or more indoor control units 150. Also, an individual control unit 150 may be physically located within a same enclosure or housing as a display 170. In such embodiments, the commonly housed control unit 150 and display 170 may each be addressed independently. However, one or more of the displays 170 may be located within the HVAC system 100 separately from and/or physically remote to the indoor control units 150. The one or more displays 170 may include a screen such as a liquid crystal display (not shown).

A data bus 180, which in the illustrated embodiment is a serial bus, couples the one or more circulation fans 110, the one or more furnaces 120, the one or more evaporator coils 130, the one or more condenser coils 142 and compressors 140, the one or more indoor control units 150, the one or more remote comfort sensors 160 and the one or more displays 170 such that data may be communicated therebetween or thereamong. As will be understood, the data bus 180 may be advantageously employed to convey one or more alarm messages or one or more diagnostic messages. A conventional cable and contacts may be used to couple the indoor unit controller 150 to the various components. In some embodiments, a wireless connection may also be employed to provide at least some of the connections. The data bus 180 can also be a wired-connection.

At least one of the circulation fans 110 operates at different capacities, i.e., motor speeds, to circulate air through the HVAC system 100, whereby the circulated air is conditioned and supplied to the conditioned space. The circulating fan moves the air at a certain capacity according to the blower volume. Different blower volumes correspond to various operating speeds of the compressor 140. The compressor 140 operates within a range from a minimum to a maximum capacity and the operating speed of the compressor is denoted as a percentage of the maximum operating capacity. The relationship between the blower volumes and the operating speeds is represented by a non-linear curve. In some embodiments, the relationships between operating speeds of the compressor 140 and the blower volumes of the circulating fan are stored in a memory of the outdoor unit controller 148. In one embodiment, the related blower volumes and operating speeds are stored in a data table in the memory. The data table can include entries for the values on the curve at 1% intervals of the operating capacity of the compressor 140. The number of entries in the data table is based on a balance between storage space and look-up speed. The outdoor unit controller 148 is configured to interpolate a requested demand data value if there are no corresponding entries in the table. For example, the indoor unit controller 150 can receive a thermostat call with a percent demand (operating speed) of 21.5%. If the data table includes entries at one percent (1%) increments between the minimum and maximum operating capacity and includes entries at 21% and 22%, then the outdoor unit controller 148 interpolates between the corresponding blower volume values for the 21% and 22% operating capacities of the compressor 140. The outdoor unit controller 148 can then send the interpolated blower volume value to the indoor unit controller 150.

FIG. 2 illustrates a block diagram of an embodiment of an outdoor unit controller 200 constructed according to the principles of the disclosure. The outdoor unit controller 200 is configured to direct the operation of an outdoor unit of a HVAC system. Additionally, the outdoor unit controller 200 is configured to determine a blower volume that corresponds to an operating speed of the outdoor unit. In some embodiments, the outdoor unit controller 200 is also configured to determine an operating speed based on a received blower volume. As such, the outdoor unit controller 200 is configured to generate control signals that are transmitted to an indoor unit controller of the HVAC system to employ in directing the operation of the HVAC system. The outdoor unit controller 200 can generate a reply to the indoor unit controller that includes the needed demand data, i.e., blower volumes or operating speeds, which was asked for in a request from the indoor unit controller.

The outdoor unit controller 200 includes an interface 210 that is configured to receive and transmit the demand data to the indoor unit controller. The interface 210 may be a conventional interface that is used to communicate (i.e., receive and transmit) data for a controller, such as a microcontroller.

The outdoor unit controller 200 also includes a processor 220 and a memory 230. The memory 230 may be a conventional memory typically located within a controller, such as a microcontroller, that is constructed to store data and computer programs. The memory 230 may store operating instructions to direct the operation of the processor 220 when initiated thereby. The operating instructions may correspond to algorithms that provide the functionality of the operating schemes disclosed herein. For example, the operating instructions may correspond to the algorithm or algorithms that implement the method illustrated in FIG. 4. The processor 220 may be a conventional processor such as a microprocessor. The interface 210, processor 220 and memory 230 may be coupled together via conventional means to communicate information. The outdoor unit controller 200 may also include additional components typically included within a controller for an outdoor unit, such as a power supply or power port. The outdoor unit can be a compressor for cooling or for heating.

The memory 220 is configured to store demand data for the HVAC system. The demand data includes operating speeds of the outdoor unit and blower volumes that correspond to the operating speeds. In one embodiment, the stored blower volumes correspond to blower volumes represented by blower control signals. The stored blower volumes and operating speeds correspond to a non-linear curve that represents the relationship therebetween. The stored values can be pre-programmed in the memory 220 during manufacturing or installation and can be based on the model or type of outdoor unit. A table or tables, such as a look-up table, may store the various demand data.

The processor 230 is configured to operate the outdoor unit at an operating speed received from the indoor unit controller. The processor 230 is also configured to employ the received operating speed to look-up the corresponding blower volume from the memory 220. The processor 230 is also configured to transmit the determined blower volume to the indoor unit controller.

In some embodiments, the outdoor unit controller 200 does not receive an operating speed from the indoor unit controller but instead receives a blower volume. As such, the processor 230 is configured to determine the proper operating speed from the look-up table employing the blower volume. If needed, the processor 230 can interpolate the operating speed from the look-up table. Whether received or determined, the processor 230 directs the operation of the compressor based on control signals that correspond to the operating speed. In one embodiment, the processor 230 is configured to operate according to the method illustrated in FIG. 4.

FIG. 3 illustrates a block diagram of an embodiment of an indoor unit controller 300 of an HVAC system constructed according to the principles of the disclosure. The indoor unit controller 300 is configured to direct the operation of or at least part of the operation of the HVAC system, such as the HVAC system 100. As such, the indoor unit controller 300 is configured to generate control signals that are transmitted to the various components to direct the operation thereof. The indoor unit controller 300 may generate the control signals in response to feedback data and/or operating data that is received from various sensors and/or components of the HVAC system. For example, indoor unit controller 300 can generate a control signal to operate a circulating fan of the HVAC system. The indoor unit controller 300 includes an interface 310 that is configured to receive and transmit the feedback data, operating data, control signals and demand data. The operating data received by the interface 310 includes a blower control signal and a thermostat call. The interface 310 may be a conventional interface that is used to communicate (i.e., receive and transmit) data for a controller, such as a microcontroller.

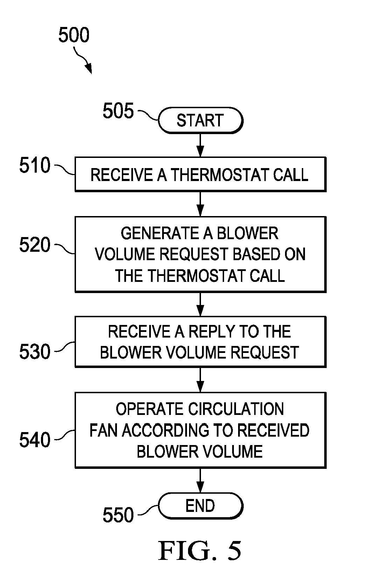

The indoor unit controller 300 also includes a processor 320 and a memory 330. The memory 330 may be a conventional memory typically located within a controller, such as a microcontroller, that is constructed to store data and computer programs. The memory 330 may store operating instructions to direct the operation of the processor 320 when initiated thereby. The operating instructions may correspond to algorithms that provide the functionality of at least some of the operating schemes disclosed herein. For example, the operating instructions may correspond to the algorithm or algorithms that implement the method illustrated in FIG. 5. The processor 320 may be a conventional processor such as a microprocessor. The interface 310, processor 320 and memory 330 may be coupled together via conventional means to communicate information. The indoor unit controller 300 may also include additional components typically included within a controller for a furnace, such as a power supply or power port.

The memory 320 is configured to store operating instructions for the HVAC system. Unlike conventional indoor unit controllers, the memory 320 does not include operating speeds for an outdoor unit of the HVAC system and the corresponding blower volumes for a circulating fan of the HVAC system.

The processor 330 is configured to operate the HVAC system according to the feedback data, operating data and demand data to provide conditioned air in response to the received thermostat calls and, in some embodiments, the blower control signal. In one embodiment, the processor 330 is configured to operate the HVAC system according to the method illustrated in FIG. 5.

FIG. 4 illustrates a flow diagram of an embodiment of a method 400 of operating a HVAC system carried out according to the principles of the disclosure. The outdoor unit controller 148 of FIG. 1 or the outdoor unit controller 200 of FIG. 2 may be used to perform the method 400. The method 400 includes determining the blower volume for a circulating fan of the HVAC system. The method 400 begins in a step 405.

In a step 410, a blower volume request is received. The blower volume request can be generated by an indoor unit controller in response to a thermostat call. The blower volume request includes a mode of operation and the percent demand (operating speed) needed by the outdoor unit according to a thermostat call. The mode of operation includes, for example, cooling normal, cooling comfort, cooling efficiency, heating mode, etc.

An operating mode of the outdoor unit is set in a step 410. The operating mode is set based on the received blower volume request. The outdoor unit remains in the set mode until receiving another blower volume request message that sets a different operating mode. In some embodiments, the outdoor unit remains in the set operating mode until receiving a demand that does not match the current operating mode. For example, a heating demand is received when the current operating mode that is set is a cooling demand.

In a step 430, a blower volume is determined in response to the blower volume request. In one embodiment, the blower volume is determined from a look-up table employing the percent demand from the blower volume request. In some embodiments, the blower volume is calculated by interpolating between values of the look-up table.

In a step 440, a response to the blower volume request is generated. The response, referred to in some embodiments as the blower volume response, is a message that includes the requested mode and the blower volume required of the indoor unit for the percent demand sent in the blower volume request. A reply to the blower volume request is sent in a step 450 that includes the response. In one embodiment, the reply is sent from the outdoor unit controller to the indoor unit controller of the HVAC system. The method 400 ends in a step 460.

FIG. 5 illustrates a flow diagram of an embodiment of a method 400 of operating a HVAC system carried out according to the principles of the disclosure. The indoor unit controller 150 of FIG. 1 or the indoor unit controller 300 of FIG. 3 may be used to perform the method 300. The method 500 includes determining demand data for the HVAC system. The method 300 begins in a step 505.

In a step 510, a thermostat call is received. The thermostat call can be a conventional request for heating or cooling demands of the HVAC system. The thermostat can be associated with a zone controller of the HVAC system.

In a step 520, a blower volume request is generated. The blower volume request is generated in response to the thermostat call. For system demands, such as heating and cooling demands, the indoor unit operates its circulation fan at the blower volume required by the outdoor unit. As such, an indoor unit controller can generate the blower volume request. The blower volume request includes the percent demand needed by the outdoor unit and the operating mode of operation.

In a step 530, a reply to the blower volume request is received. The reply includes the requested mode of operation and the blower volume required of the indoor unit for the percent demand sent in the blower volume request. The reply can be sent by the outdoor unit controller of the HVAC system.

The circulation fan of the HVAC system is operated according to the received blower volume in a step 540. In one embodiment, the indoor unit controller of the HVAC system generates control signals to direct the operation of the circulation fan according to the received blower volume. The method 500 ends in a step 550.

The above-described methods may be embodied in or performed by various conventional digital data processors, microprocessors or computing devices, wherein these devices are programmed or store executable programs of sequences of software instructions to perform one or more of the steps of the methods, e.g., steps of the method of FIG. 4 or FIG. 5. The software instructions of such programs may be encoded in machine-executable form on conventional digital data storage media that is non-transitory, e.g., magnetic or optical disks, random-access memory (RAM), magnetic hard disks, flash memories, and/or read-only memory (ROM), to enable various types of digital data processors or computing devices to perform one, multiple or all of the steps of one or more of the above-described methods, e.g., one or more of the steps of the method of FIG. 4 or FIG. 5. Additionally, an apparatus, such as indoor unit controller or an outdoor unit controller, may be designed to include the necessary circuitry or programming to perform each step of a method of disclosed herein.

Portions of disclosed embodiments may relate to computer storage products with a non-transitory computer-readable medium that have program code thereon for performing various computer-implemented operations that embody a part of an apparatus, system, carry out the steps of a method set forth herein or provide a single user interface screen as disclosed. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as ROM and RAM devices. Examples of program code include both machine code, such as produced by a compiler, and files containing higher level code that may be executed by the computer using an interpreter.

Those skilled in the art to which this application relates will appreciate that other and further additions, deletions, substitutions and modifications may be made to the described embodiments.

## Claims

1. A controller for a multispeed outdoor unit of a heating, ventilating and air conditioning (HVAC) system, comprising:
an interface configured to receive a request for a second portion of demand data from an indoor controller of said HVAC system, wherein said request includes a first portion of said demand data that corresponds to said second portion; and
a processor configured to respond to said request by determining said second portion based on said first portion and sending said second portion of said demand data to said indoor controller of said HVAC system.

2. The controller as recited in Claim 1 wherein said first portion is an operating speed of said compressor that corresponds to a thermostat call of said HVAC system and said second portion is a blower volume for said circulating fan that corresponds to said operating speed for said compressor.

3. The controller as recited in Claim 1 wherein said first portion is a blower volume for said circulating fan that corresponds to a thermostat call of said HVAC system and said second portion is an operating speed of said compressor that corresponds to said blower volume.

4. The controller as recited in Claim 1 further comprising a memory having stored thereon said demand data, wherein said processor employees said first portion to determine said second portion from said memory.

5. The controller as recited in Claim 1 wherein said processor is configured to determine said second portion by interpolating between entries of said demand data stored on a memory of said controller.

6. A controller for an indoor unit of a heating, ventilating and air conditioning (HVAC) system, comprising:
an interface configured to receive a thermostat call; and
a processor configured to send a request for demand data that corresponds to said thermostat call to a controller of an outdoor unit of said HVAC system, wherein said requested demand data is a blower volume for a circulating fan of said HVAC system.

7. The controller as recited in Claim 6 wherein said processor is configured to request said blower volume when said operating speed is known from said thermostat call.

8. The controller as recited in Claim 6 wherein said interface is further configured to receive a blower control signal and said processor is configured to send a known blower volume to said controller of said outdoor unit.

9. The controller as recited in Claim 6 wherein said interface is further configured to receive a response from said outdoor unit in reply to said request, said response including either said blower volume or said operating speed.

10. A multispeed outdoor unit of a HVAC system, comprising:
a compressor; and
an outdoor unit controller configured to direct operations of said compressor, said outdoor unit controller including:
an interface configured to receive a request for a second portion of demand data from an indoor controller of said HVAC system, wherein said request includes a first portion of said demand data that corresponds to said second portion; and
a processor configured to respond to said request by determining said second portion based on said first portion and sending said second portion of said demand data to said indoor controller of said HVAC system.
